(19) Europäisches Patentamt
European Patent Office
Office européen des brevets

(11) **EP 4 443 901 A1**

(12) **EUROPEAN PATENT APPLICATION**

(43) Date of publication:
**09.10.2024 Bulletin 2024/41**

(51) International Patent Classification (IPC):
**H04R 3/00** *(2006.01)* **H04S 7/00** *(2006.01)*
**H04R 1/40** *(2006.01)*

(21) Application number: **23167157.9**

(22) Date of filing: **06.04.2023**

(52) Cooperative Patent Classification (CPC):
**H04R 3/005; H04M 3/568; H04S 7/30;** H04R 1/406;
H04R 2430/01; H04S 2400/01; H04S 2400/11;
H04S 2400/13; H04S 2400/15; H04S 2420/03

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Koninklijke Philips N.V.**
**5656 AG Eindhoven (NL)**

(72) Inventors:
• JANSE, Cornelis Pieter
  **5656AG Eindhoven (NL)**

• BLOEMENDAL, Brian Brand Antonius Johannes
  **5656AG Eindhoven (NL)**
• JANSSEN, Rik Jozef Martinus
  **5656AG Eindhoven (NL)**
• OOMEN, Arnoldus Werner Johannes
  **5656AG Eindhoven (NL)**
• RODRIGUEZ CANO, Luis Felix
  **5656AG Eindhoven (NL)**
• ROOS, Kees
  **5656AG Eindhoven (NL)**

(74) Representative: **Philips Intellectual Property &
Standards**
**High Tech Campus 52**
**5656 AG Eindhoven (NL)**

(54) **GENERATION OF AN AUDIO STEREO SIGNAL**

(57)    An apparatus comprises a plurality of audio beamformers (101) each of which generates a mono audio signal representing audio captured by a beam. An adapter (105) adapts each audio beamformer to capture an audio source and a direction determiner (109) determines a direction of audio captured by the beams. A generator (107) generates an intermediate stereo signal component for the mono audio signals in which the mono audio signal is positioned at a given position in the stereo image of the intermediate stereo signal component with the position depending on the direction of audio captured by the corresponding beam. A combiner (111) is arranged to generate the stereo audio signal to include at least some of the intermediate stereo signal components. A transmitter (113) may transmit the stereo signal to a remote source. The approach may provide an improved stereo image for, e.g. teleconferencing applications allowing facilitated or improved differentiation of speakers/audio sources.

**FIG. 1**

**Description**

FIELD OF THE INVENTION

The invention relates to generation of an audio stereo signal and in particular, but not exclusively, to generating an audio stereo signal for teleconferencing applications.

BACKGROUND OF THE INVENTION

Capturing audio, and in particularly speech, has become increasingly important in the last decades. Indeed, capturing speech has become increasingly important for a variety of applications including telecommunication, teleconferencing, gaming, audio user interfaces, etc. However, a problem in many scenarios and applications is that the desired speech source is typically not the only audio source in the environment. Rather, in typical audio environments there are many other audio/noise sources which are being captured by the microphone. One of the critical problems facing many speech capturing applications is that of how to best extract audio and speech in a noisy environment. In order to address this problem a number of different approaches for noise suppression have been proposed.

In recent years, various forms of remote speech communication applications using a range of different communication media (including in particular the Internet) have become increasing popular and it is desired to further expand and improve on the provided services, options, and user experience.

Remote speech communication using landline, mobile or internet communication thus far has substantially been limited to the transmission of mono-speech content. However, the constraint of using mono signals may restrict the user experience. For example, teleconferencing applications based on mono signals may provide a limited representation of the environment in which the audio is captured. In particular, the use of mono signals limits the ability of our spatial hearing to extract separate sources such as a desired speaker from a complex sound scene.

It has been proposed to introduce stereo communication to various remote speech applications such as specifically Internet based remote conference applications. The introduction of stereo signals allows a spatial dimension to be communicated that may provide an improved user experience in many applications.

In general, a mono audio capture of a room tends to be perceived as limiting and not providing a sufficient user experience in many scenarios. It is in many applications desirable to include a spatial component, for example to facilitate differentiating between different speakers.

On the recording side, a stereo microphone may be used to capture spatial properties of the environment suitable for stereo distribution. Such a stereo microphone typically comprises two microphone elements with different directivities and with each microphone element capturing one channel of the stereo signal. There is a variety of recording techniques, with basically two beams, where one points in the left direction and the other one to the right direction. The two outputs are the Left and Right channel of the stereo pair. For example, with X/Y recording two identical cardioid microphones are placed on top of each other while facing away from each other at a 90 degree angle. The two microphones have different radiation characteristics, and the outputs are the L and R channel of the stereo pair.

In another example, with M(id)/S(ide) recording a Mid microphone with omni or cardioid characteristic is used that points to the middle of the scene and a Side microphone with a so-called figure of eight or dipole characteristic is mounted perpendicular on the Mid microphone. The sensitivity of a perfect dipole is the same for sources that are 180 degrees separated, but there is a phase shift of 180 degrees between the output signals. Using this effect one can create two new beams by adding or subtracting a (possibly) scaled version of the dipole output to the output of the Mid microphone. The beams can be in all directions, including the X/Y characteristic. Compared to the X/Y technique the M/S technique is more flexible: you can widen or narrow the stereo image by changing the coefficients in the mixing matrix.

However, whereas such approaches may provide desirable performance in many scenarios and applications, they are not optimal in all scenarios. For example, in many scenarios the spatial information may be relatively limited and in particular for sound sources in the far-field of the stereo microphone, it may be difficult to spatially separate the different sources. The approach may also tend to be relatively complex and resource demanding in many scenarios.

Hence, an improved approach would be advantageous, and in particular an approach allowing reduced complexity, increased flexibility, facilitated implementation, reduced cost, improved audio capture, improved spatial perception/differentiation of sound sources, improved audio source separation, improved remote speech application support, improved teleconferencing support, an improved user experience, and/or improved performance would be advantageous.

SUMMARY OF THE INVENTION

Accordingly, the Invention seeks to preferably mitigate, alleviate or eliminate one or more of the above mentioned disadvantages singly or in any combination.

According to an aspect of the invention there is provided an apparatus for generating a stereo audio signal, the apparatus comprising: a plurality of audio beamformers, each audio beamformer being arranged to generate a mono audio signal representing audio captured by a beam formed by the audio beamformer; an adapter arranged to adapt each audio beamformer of the plurality of audio beamformers to capture an audio source; a direction determiner arranged to determine a direction of audio captured by the beams formed by the plurality of audio beamformers; a generator arranged to generate an intermediate stereo signal component for each of at least some of the mono audio signals, a first intermediate stereo signal component for a first mono audio signal of the at least some of the mono audio signals comprising the first mono audio signal positioned at a first position in a stereo image of the first intermediate stereo signal component, the first position being dependent on a first direction being a direction of audio captured by a first beam of a first audio beamformer being an audio beamformer out of the plurality of audio beamformers generating the first mono audio signal; and a combiner arranged to generate the stereo audio signal to include at least some of the intermediate stereo signal components.

The approach may provide improved operation and/or performance in many embodiments. It may allow an improved stereo signal with a stereo image that may provide improved user perception and experience in many embodiments and scenarios. The approach may allow for improved freedom in generating a suitable spatial arrangement of audio sources in a stereo image. The approach may typically reduce the sensitivity of the provided stereo image on the specific properties of the audio scene being captured and on the specific capture options. In particular, it may in many scenarios and applications allow increased flexibility in providing a stereo image that may be reflect properties of the audio scene yet not be fully constrained by these.

The approach may in many embodiments allow a substantially improved differentiation between audio sources and may in many scenarios allow a listener listening to the stereo image of the stereo signal to be able to separate and identify individual audio sources.

In many embodiments, a more well defined, and, e.g., point source, representation of each audio source may be provided.

The approach may in many embodiments facilitate or improve capturing spatial properties of audio sources and with these being represented (including being emphasized or modified) in the stereo image of the generated audio signal.

For example, the Inventors have realized that conventional capturing of stereo information using a stereo microphone (or specifically two microphones with different directivity) tends to be insufficient for many applications. In particular, it is often difficult to separate audio sources in the far field and a conventional stereo signal representing the audio captured by a stereo microphone will tend to result in audio sources that are not well separable/differentiable and often not spatially well defined.

The described approach may in many scenarios provide a stereo signal in which different audio sources are more clearly separable and differentiable and/or where the audio sources are spatially well-defined.

The approach may allow for a stereo signal to be generated that may provide an improved spatial user experience to a person listening to the stereo signal.

The beamformers may be arranged to receive a plurality of microphone signals from a plurality of microphones and may perform beamforming on the microphone signals. The plurality of microphones may form a microphone array (such as, e.g., with the plurality of microphones being arranged in a line). The beamforming may in some cases be performed by a weighted summation/combination of the microphone signals. In some cases, each filter may be filtered by adaptive filters before summation/combination. The adapter may be arranged to perform beamforming by adapting the coefficients/weights of the weighted summation or filtering.

The adapter may be arranged to adapt each audio beamformer of the plurality of audio beamformers to capture an audio source with the audio sources typically being different audio sources.

In accordance with an optional feature of the invention, the apparatus is a teleconferencing apparatus further comprising a transmitter for transmitting the stereo audio signal to a remote device.

The approach may in many embodiments provide an improved teleconferencing apparatus. The teleconferencing apparatus may in many embodiments provide an improved stereo signal providing an improved representation of speakers, and typically allowing a clearer and easier differentiation between different speakers.

The mono audio signals may specifically be speech signals. The audio sources may specifically be speakers/participants in the teleconference.

In accordance with an optional feature of the invention, the generator is arranged to position the first mono audio signal in the stereo image by a scaled addition of the first mono audio signal to a first channel and to a second channel of the first intermediate stereo signal component with a relative scale factor for the first channel relative to the second channel being dependent on the first direction.

This may provide improved performance and/or facilitate operation and/or implementation in many embodiments. The generator may be arranged to position the mono audio signal in the stereo image of the corresponding intermediate stereo signal component by performing amplitude panning.

The first channel may be a left or right channel and the second channel may be the complementary channel.

In accordance with an optional feature of the invention, the generator is arranged to determine a scale factor for the first channel as a function of the first direction, and to determine a scale factor for the second channel such that a sum of the first scale factor and the second scale factor meets a criterion.

This may provide improved performance and/or facilitate operation and/or implementation in many embodiments. The criterion may for example be that the sum has a given/fixed/predetermined value that is independent of the position.

In accordance with an optional feature of the invention, the first position is a monotonic function of the first direction.

This may provide improved performance, and often an improved user experience, in many scenarios.

In accordance with an optional feature of the invention, the first position is a linear function of the first direction.

This may provide improved performance, and often an improved user experience, in many scenarios.

In accordance with an optional feature of the invention, the first position is a non-linear function of the first direction.

This may provide improved performance, and often an improved user experience, in many scenarios.

In accordance with an optional feature of the invention, the first position is a function of the first direction, the function providing a mapping of an interval of direction angles of the first direction to a larger interval of angles of positions in the stereo image.

This may provide improved performance, and often an improved user experience, in many scenarios. The larger interval of angles of positions in the stereo image may be the entire interval of possible angles (corresponding to the entire stereo image).

In accordance with an optional feature of the invention, the first position is a function of the first direction, the function providing a mapping of an interval of direction angles to a smaller interval of angles of positions in the stereo image.

This may provide improved performance, and often an improved user experience, in many scenarios.

In accordance with an optional feature of the invention, the combiner is arranged to adapt an amplitude of the first intermediate stereo signal component in the combined stereo signal relative to an amplitude of a second intermediate stereo signal component representing a second mono audio signal in the combined stereo signal depending on the first direction.

This may provide improved performance, and often an improved user experience, in many scenarios.

In accordance with an optional feature of the invention, the combiner is arranged to not include the first interim stereo signal component in the combined stereo signal if the first direction meets a criterion.

This may provide improved performance, and often an improved user experience, in many scenarios. The criterion may specifically be that the direction falls within a subrange/subinterval in the stereo image.

In accordance with an optional feature of the invention, the first direction is indicative of a direction of arrival for audio captured by an audio beamformer generating the first mono audio signal.

This may provide improved performance, and often an improved user experience, in many scenarios.

According to an aspect of the invention there is provided a method of capturing audio of generating a stereo audio signal, the method comprising: each audio beamformer of a plurality of audio beamformers generating a mono audio signal representing audio captured by a beam formed by the audio beamformer; adapting each audio beamformer of the plurality of audio beamformers to capture an audio source; determining a direction of audio captured by the beams formed by the plurality of audio beamformers; generating an intermediate stereo signal component for each of at least some of the mono audio signals, a first intermediate stereo signal component for a first mono audio signal of the at least some of the mono audio signals comprising the first mono audio signal positioned at a first position in a stereo image of the first intermediate stereo signal component, the first position being dependent on a first direction being a direction of audio captured by a first beam of a first audio beamformer being an audio beamformer out of the plurality of audio beamformers generating the first mono audio signal;

and generating the stereo audio signal to include at least some of the intermediate stereo signal components.

These and other aspects, features and advantages of the invention will be apparent from and elucidated with reference to the embodiment(s) described hereinafter.

BRIEF DESCRIPTION OF THE DRAWINGS

Embodiments of the invention will be described, by way of example only, with reference to the drawings, in which

FIG. 1 illustrates an example of elements of an apparatus generating a stereo audio signal in accordance with some embodiments of the invention;
FIG. 2 illustrates an example of an audio beamformer; and
FIG. 3 illustrates some elements of a possible arrangement of a processor for implementing elements of an audio apparatus in accordance with some embodiments of the invention.

DETAILED DESCRIPTION OF SOME EMBODIMENTS OF THE INVENTION

The following description focuses on embodiments of the invention applicable to a speech capturing and communication audio system based on beamforming, such as specifically a teleconferencing apparatus, but it will be appreciated that the approach is applicable to many other systems and scenarios for audio capturing.

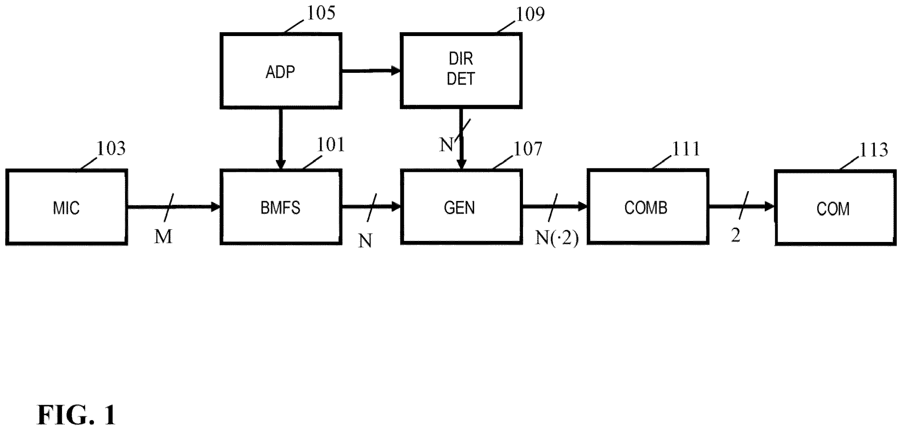

FIG. 1 illustrates an example of an audio apparatus that is arranged to capture audio sources and generating a stereo signal representing one or more of these audio sources and with the stereo signal providing a stereo image in which the audio sources may have spatial properties. The apparatus may specifically be a teleconferencing apparatus and the following description will focus on such an example, and specifically will focus on the audio sources being speakers and the captured audio signals being speech signals. However, whereas the approach may provide particularly advantageous effects and benefits for such a scenario and application, it will be appreciated that the approach is in no way limited to such an application but may be applied to capturing of other audio sources and for other purposes than for teleconferencing. For example, the approach may be used to capture other types of audio sources and for other purposes and applications, such as, e.g., capturing musical instruments of an orchestra or band and generating a stereo signal comprising a spatial stereo image representing the different instruments.

In the example, the apparatus comprises a set of beamformers 101 coupled to microphone array of M microphones 103. In the example, the plurality of beamformers 101 is illustrated by a single functional unit reflecting that multiple beamformers may typically be implemented by one processing/functional unit that performs the operations for all beamformers (e.g. as parallel or sequential operations). Thus, the beamformers can be considered equivalent to one beamformer forming multiple beams (or to a smaller set of beamformers of which at least one form multiple beams).

Each of the beamformers 101 is arranged to form a beam and generate a mono audio signal representing the audio captured by that beam.

The number N of beamformers 101, and thus generated mono audio signals, may be different in different embodiments. In many embodiments, the number N of beamformers may be no less than 5 or even 10 beamformers. In many embodiments, the number N of beamformers may be no more than 5, 10, or 20 beamformers.

The beamformers 101 are coupled to an adapter 105 which is arranged to adapt the beamformers 101, and specifically the adapter 105 is arranged to adapt the beamformers to adapt the formed beam, including directing the beam towards a detected audio source and typically dynamically adapting the beam to follow (tracking) the audio source as it moves.

The adapter 105 may in many embodiments also comprise functionality for searching for /detecting new audio sources towards which new beams may be formed, determining when to stop tracking an audio source, switching beams towards new audio sources, etc. For example, the adapter 105 may control a beamformer to search for an audio source, and to track any detected audio sources as long as an average signal level (e.g., averaged over a sufficiently long time interval to compensate for speech pauses) is above a threshold, and to stop tracking an audio source and search for a new audio source otherwise.

The beamformers 101 are accordingly adaptive beamformers where the directivity can be controlled by the adapter 105 adapting the parameters of the beamform operation.

Each of the beamformers 101 may specifically be a filter-and-combine (and in most embodiments a filter-and-sum) beamformer. A beamform filter may be applied to each of the microphone signals and the filtered outputs may be combined. In some embodiments, the combination may e.g. include functions being applied to different signals (such as e.g. a frequency compensation to compensate for different frequency sensitivities of different microphones, a varying delay, a non-linear gain compensation etc.). However, typically the outputs of the filters are simply added together such that the filter-and-combine beamformer specifically is implemented as a filter-and-sum beamformer.

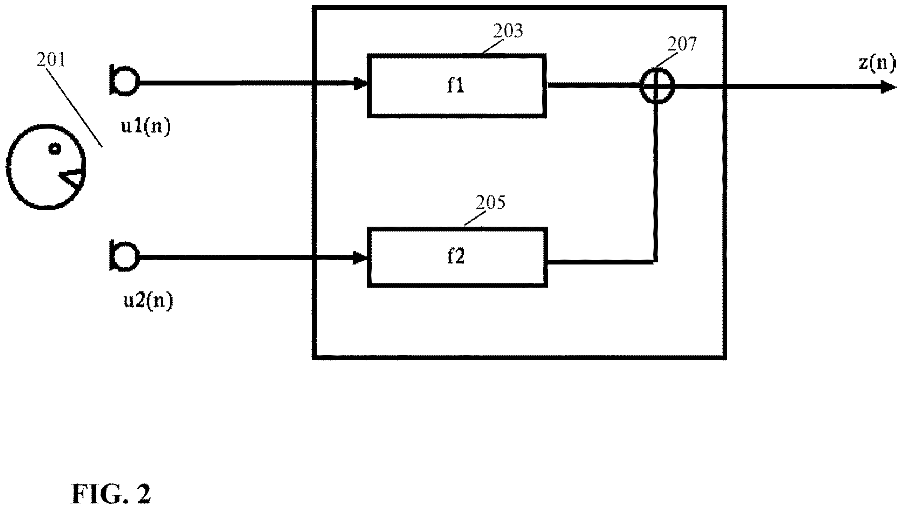

FIG. 2 illustrates a simplified example of a filter-and-sum beamformer based on a microphone array comprising only two microphones 201. In the example, each microphone is coupled to a beamform filter 203, 205 the outputs of which are summed in summer 207 to generate a beamformed audio output signal. The beamform filters 203, 205 have impulse responses f1 and f2 which are adapted to form a beam in a given direction. It will be appreciated that typically the microphone array will comprise more than two microphones and that the principle of FIG. 2 is easily extended to more microphones by further including a beamform filter for each microphone.

Each of the beamformers 101 may include such a filter-and-sum architecture for beamforming (as, e.g., described in US 7 146 012 and US 7 602 926). It will be appreciated that in many embodiments, the microphone array 201 may however comprise more than two microphones.

In most embodiments, each of the beamform filters has a time domain impulse response which is not a simple Dirac pulse (corresponding to a simple delay and thus a gain and phase offset in the frequency domain) but rather has an impulse response which typically extends over a time interval of no less than 2, 5, 10 or even 30 msec.

The impulse response may often be implemented by the beamform filters being FIR (Finite Impulse Response) filters with a plurality of coefficients. The adapter 105 may in such embodiments adapt the beamforming by adapting the filter coefficients. In many embodiments, the FIR filters may have coefficients corresponding to fixed time offsets (typically sample time offsets) with the adaptation being achieved by adapting the coefficient values. In other embodiments, the beamform filters may typically have substantially fewer coefficients (e.g., only two or three) but with the timing of these (also) being adaptable.

A particular advantage of the beamform filters having extended impulse responses rather than being a simple variable delay (or simple frequency domain gain/phase adjustment) is that it allows the beamformer to not only be adapted to the strongest, typically direct, signal component. Rather, it allows the beamformer to be adapted to include further signal paths corresponding typically to reflections. Accordingly, the approach allows for improved performance in most real environments, and specifically allows improved performance in reflecting and/or reverberating environments and/or for audio sources further from the microphone array 103.

A critical element of the performance of an adaptive beamformer is the adaptation of the directionality (generally referred to as the beam although it will be appreciated that the extended impulse responses results in this directivity having not only a spatial component but also a temporal component, i.e., the beam formed as a temporal variation for reflections etc.).

In the system of FIG. 1, the adapter 105 is arranged to adapt the beamform parameters of the beamformers, and specifically, it is arranged to adapt the coefficients of the beamform filters to provide a given (spatial and temporal) beam.

It will be appreciated that different adaptation algorithms may be used in different embodiments and that various optimization parameters will be known to the skilled person. For example, the adapter 105 may adapt the beamform parameters to maximize the output signal value of the beamformer 101. As a specific example, consider a beamformer where the received microphone signals are filtered with forward matching filters and where the filtered outputs are added. The output signal is filtered by backward adaptive filters, having conjugate filter responses to the forward filters (in the frequency domain corresponding to time inversed impulse responses in the time domain). Error signals are generated as the difference between the input signals and the outputs of the backward adaptive filters, and the coefficients of the filters are adapted to minimize the error signals thereby resulting in the maximum output power. This can further inherently generate a noise reference signal from the error signal. Further details of such an approach can be found in US 7 146 012 and US 7 602 926.

It is noted that approaches such as that of US 7 146 012 and US 7 602 926 are based on the adaptation being based both on the audio source signal z(n) and a noise reference signal(s) x(n) from the beamformers, and it will be appreciated that the same approach may be used for the beamformer of FIG. 2.

Indeed, the beamformers 101 may specifically be beamformer arrangements corresponding to those disclosed in US 7 146 012 and US 7 602 926.

The adapter 105 may be arranged to adapt the beamforming to capture a desired audio source and represent this in the beamformed audio output signal. It may further generate a noise reference signal to provide an estimate of the remaining captured audio, i.e., it is indicative of the noise that would be captured in the absence of the desired audio source.

In examples where the beamformers 101 may be beamformers such as those disclosed in US 7 146 012 and US 7 602 926, the noise reference may be generated as an error signal. However, it will be appreciated that other approaches may be used in other embodiments. For example, in some embodiments, the noise reference may be generated as the microphone signal from an (e.g., omnidirectional) microphone minus the generated beamformed audio output signal, or even the microphone signal itself in case this noise reference microphone is far away from the other microphones and does not contain the desired speech. As another example, the set of beamformers 101 may be arranged to generate a second beam having a null in the direction of the maximum of the beam generating the beamformed audio output signal, and the noise reference may be generated as the audio captured by this complementary beam.

In some embodiments, post-processing such as noise suppression may be applied to the output of the audio capturing apparatus. This may improve performance for, e.g., voice communication. In such post-processing, non-linear operations may be included, although it may, e.g., for some speech recognizers, be more advantageous to limit the processing to only include linear processing.

The adapter 105 is thus arranged to control the beamformers 101 to search for an audio source and when an audio source is detected, the adapter 105 may dynamically adapt the beam to follow/track the audio source. In some embodiments, the adapter 105 may further adapt the beam shape, such as, e.g., narrowing the beam following the initial detection.

In the specific example, the apparatus is specifically aimed at capturing speech signals from speakers in the environment. In this example, the adapter 105 may be arranged to include considerations in the adaption of whether the audio source is indeed a speech signal or not. For example, the adapter 105 may for a given detected audio source extract properties of the captured audio (such as frequency distribution, activity patterns, etc.) and determine whether these match properties expected for a speech signal. If so, the adapter 105 may continue to track the audio source and otherwise it may reject the audio source and proceed to search for another audio source that does represent a speaker.

Thus, the beamformers 101 form beams towards detected audio sources, which specifically may be different speakers in an environment. Each beamformer provides a single mono audio signal that represents the audio that has been captured in the beam formed by that beamformer. Thus, a plurality of mono signals is generated by the set/bank/plurality of beamformers with typically each mono signal representing a different audio source/speaker in the environment.

The audio signals are fed to a generator 107 which is arranged to generate intermediate stereo signal components for the mono audio signals. The generator 107 may specifically generate an intermediate stereo signal component for each of the mono audio signals received from the beamformers 101.

For a given mono audio signal, the generator 107 is arranged to generate the intermediate stereo signal component to be a stereo signal component in which the mono audio signal is positioned at a given position in the stereo image of the intermediate stereo signal component. The intermediate stereo signal component comprises two channels, namely a first and second channel which may correspond to a left and right channel (or vice versa) respectively. Thus, rather than the mono audio signals which has a single value at any given time instant (specifically one sample value per sample instant), the intermediate stereo signal component has two values, namely one for a left channel and one for a right channel. The two component stereo representation thus creates a stereo image ranging from a left position corresponding to the rendering position for the left channel to a right position corresponding to the rendering position for the right channel (and vice versa).

The apparatus further comprises a direction determiner 109 which is arranged to determine a direction of audio captured by the beams formed by the plurality of audio beamformers. For each beamformer/beam, the direction determiner 109 may thus determine the direction of the audio that is captured by that beam. Specifically, each beamformer/beam may track one audio source, such as a speaker, and the direction determiner 109 may be arranged to determine the direction to that audio source (in many cases by considering the direction of the beam formed to be the direction to the audio source).

In many embodiments, the direction of the captured audio may be determined as the direction of the beam that is formed. Thus, the direction determiner 109 may be arranged to determine the directions of the beams that are formed by the beamformers and with this direction being used to indicate the direction towards the audio source captured by the beam. This will typically provide a very accurate estimate of the direction towards the audio source captured by the audio beam as the adapter 105 may control the beam to detect and then follow the audio source. Typically, the beam will be directed in the direction in which the audio arrives at the microphone array 103, and thus the beam direction reflects the (main) direction of arrival for the audio captured by the beam (typically the direction of arrival of the direct path rather than of reflections), and accordingly from the audio source being detected. The determined direction will typically reflect the direction from which the audio source would be perceived to arrive from to a person positioned at the position of the microphone array 103.

It will be appreciated that many different approaches for determining a direction of a formed audio beam is known and that the direction determiner 109 may use any suitable approach. In some embodiments, the direction determiner 109 may for example evaluate the coefficients applied to each microphone signal or the taps of the beamform filters to determine a beam direction of the beam.

For example, if a beamformer forms a beam by a weighted combination of the signals from a plurality of substantially omnidirectional microphones (typically using complex weights to represent both an amplitude and phase/delay), the direction of the beam can readily be determined from the applied coefficients as will be known to the skilled person.

As another example, if a beamformer is based on only two microphone inputs and are implemented in the frequency domain with filter coefficients F1 and F2 belonging to the two microphones 1 and 2 respectively, the inverse Fourier transform may be taken of the product F1·F2*, with * representing the conjugate, and from this cross-correlation the peak is determined, from which a difference in travel time td can be calculated. The difference in travel time is related to the angle of incidence $\phi i$ by the formula:

$$\cos(\phi i) = td \cdot c / d,$$

where c is the speed of sound and d the distance between the two microphones. Suitable exemplary approaches may for example be found in US6774934 or in "Fast Cross-correlation for TDOA Estimation on Small Aperture Microphone Arrays" by F. Grondin et al, arXiv:2204.13622.

In some embodiments, the beam may not directly follow/track an audio source but may for example change slower than the audio source moves or be relatively constant. In many cases, such a discrepancy may be acceptable, and the direction of the beam may be used directly as an estimate for the direction of arrival for the captured audio. However, in some embodiments, the direction of arrival may be determined to not directly be equal to the direction of the beam being formed. For example, in some embodiments, the direction determiner 109 may not directly consider the coefficients used by the beamformers but may use a different algorithm to detect a direction of arrival for an audio signal captured by the microphone array 103, and such an algorithm may, e.g., directly consider and be based on the microphone signals independently of the beamforming. The direction of arrival may for example be determined as the strongest detected audio signal within an angle interval corresponding to a beam angle interval for a given beamformer/beam. This direction of arrival may then be used as the direction for the corresponding mono signal generated by that beamformer.

The direction determiner 109 is coupled to the generator 107 which is fed the direction estimates for the different beams. Thus, the generator 107 receives the mono audio signals from the beamformers 101 as well as direction estimates for each beam/beamformer.

The generator 107 is arranged to generate the intermediate stereo signal components from the mono audio signals such that the mono audio signals are positioned at positions in the stereo image which are dependent on the direction estimates.

Specifically, for a given mono audio signal from a given beamformer 101, the generator 107 may proceed to generate the intermediate stereo signal component for that mono audio signal to have a specific position in the stereo image, where that position is determined from the direction of the mean generating the mono audio signal.

In many examples, the intermediate stereo signal component for a given mono audio signal is generated to have a left and right channel component that include the mono audio signal. The phase of the mono audio signal in the left and right channel is typically the same and the position in the stereo image is controlled by adapting the relative level/amplitude/signal strength in the two channels. If the level of the left channel is non-zero and the level in the right channel is zero or close to zero, the position of the mono audio signal is in the stereo image perceived to be at the rendering position of the left channel. If the level of the right channel is non-zero and the level in the left channel is zero or close to zero, the position of the mono audio signal is in the stereo image perceived to be at the rendering position of the right channel. If the level is the same in the two channels, the perceived position is in the middle of the stereo image, and for other relative amplitude levels the perceived position will be somewhere between the left rendering position and the right rendering position. Thus, in many embodiments, the generator 107 may be arranged to perform amplitude panning to position a given mono audio signal at a desired position in the stereo image of the intermediate stereo signal component representing that mono audio signal.

The specific position that is selected for a given mono audio signal depends on the direction estimate for the corresponding beam/beamformer. For example, the stereo image may be represented by angles in the interval from, say, $-\pi/2$ to $+\pi/2$, and the direction estimate may also be given by an angle in the interval from, say, $-\pi/2$ to $+\pi/2$. In some embodiments, the stereo image angle/direction may be determined as a function of the beam direction angle. Indeed, in many examples, the stereo image direction may be determined to be equal to the beam direction angle.

The generator 107 may accordingly be arranged to generate the intermediate stereo signal component such that the mono audio signal is positioned at the corresponding angle in the stereo image by determining the relative amplitude of the mono audio signal in the left and right channel corresponding to the determined angle.

Thus, the generator 107 may typically generate a plurality of intermediate stereo signal components with each of these typically corresponding to one audio source, and for the specific teleconferencing application typically with each intermediate stereo signal component representing a specific speaker. Further, the position in the stereo image in each intermediate stereo signal component is determined dependent on the direction of the audio represented by the intermediate stereo signal component, typically as indicated by the direction of the beam. As the speakers will typically be at different positions, the direction estimates will typically be different, and the positions in the stereo images will typically therefore also be different in the generated intermediate stereo signal components.

The generator 107 is coupled to a combiner 111 to which the generated intermediate stereo signal components are fed. The combiner 111 is arranged to generate an output stereo audio signal which, for at least some times, includes at least some of the intermediate stereo signal components. In many embodiments, the output stereo signal is generated to include all the intermediate stereo signal components received from the generator 107.

The combiner 111 may in many embodiments simply add all the left channel signals/values together and all the right channel signals/values together from, e.g., all the intermediate stereo signal components. Thus, the combiner 111 may in many embodiments perform a summation of the channels of (at least some of) the intermediate stereo signal components. In some embodiments, the combiner 111 may not just simply add the different intermediate stereo signal components together but may include, e.g., adapting the relative levels of different intermediate stereo signal component, select a subset of intermediate stereo signal components, filter one or more of the intermediate stereo signal components etc.

Thus, the combiner generates the output stereo signal such that the intermediate stereo signal components retain their position in the stereo image, i.e., the position of a given mono audio signal in the stereo image of the output stereo signal is the same as the position of the mono audio signal in the corresponding intermediate stereo signal component.

In particular, in some embodiments, the summation may be a weighted summation where different intermediate stereo signal components may be weighted differently (but with the weight for the different channels being the same for the same intermediate stereo signal component).

The generator 107 is in the specific example coupled to a communicator 113 which is arranged to transmit the stereo signal to a remote device. The communicator 113 may for example transmit the communication signal over a network, such as specifically the Internet, a radio communication link, a dedicated link, or any link that allows audio data to be communicated.

Further, the communicator 113 may be arranged to encode and transmit the output stereo signal in any suitable way, including using different audio encoding approaches, speech signal encoding approaches, suitable modulation and coding techniques etc., as will be well known to the skilled person.

In the specific example of a teleconferencing application, the apparatus may thus generate an output stereo signal that is transmitted to one or more remote devices participating in the teleconference. The output stereo signal includes audio corresponding to different speakers, with the different speakers being positioned in the stereo image. A receiving teleconferencing device may simply render the received stereo signal to provide a user with a spatial perception and representation of the speakers. For example, the output stereo signal may simply be appropriately decoded and presented using a pair of headphones/earphones.

More generally, a stereo signal may be provided which represents different audio sources, such as different instruments, at different positions of a stereo image of the stereo signal.

Thus rather than pursuing a conventional approach of capturing a stereo signal with a stereo image by capturing two channels in the environment, such as by using a stereo microphone or other stereo capture configuration, the approach may use a dedicated approach where multiple audio beams are used to select and isolate individual audio sources, such as specifically speakers, followed by a construction of a stereo image in which the audio sources may be positioned at specific positions.

Each of the formed beams provide a single mono audio signal and thus each audio source selected and separated by a formed beam may be represented by a mono audio signal with no inherent spatial property or characteristic. However, the stereo signal is then generated by combining the individual mono audio signals such that each signal is provided with a spatial property in the form of a position in the stereo image. This "reintroduction" of spatial properties is dependent on the spatial information of the captured signals, and thus the audio sources, by the position being dependent on the direction of arrival (specifically as estimated by the beam direction).

The approach thus synergistically combines the use of beams to separate and isolate audio sources in the scene (and essentially extract the audio component) with an "artificial" generation of a stereo image in order to provide a spatial audio perception, and indeed with these features interworking such that the output spatial image is dependent on the input spatial data.

The approach may in many scenarios provide substantial advantages in comparison to a conventional approach of simply capturing stereo audio that represents the spatial information of the scene from the capture position(s). In particular, it allows for the stereo image of the output stereo signal to be adapted and optimized for the specific performance that is desired. For example, it may allow that different audio sources, such as specifically speakers, are positioned further apart thereby allowing them to be easier to differentiate by the listener, similar to as in a face-to-face interaction. It also allows the sound sources to be spatially well defined as they can be inserted in the stereo image of the output stereo signal based on a single mono signal. This may, e.g., allow that the sound sources/speakers are represented as point sources even if they might be perceived more spatially spread if captured by, e.g., a stereo microphone (e.g., due to this capturing reflections reaching the stereo microphone from different directions). Thus, even if the apparatus were to seek to maintain the original spatial relations between the audio source speakers, e.g., by setting the stereo image angle to be equal to the beam direction angle, a more well defined stereo image with sound sources/speakers that are easier to differentiate and separate can be achieved.

Rather than merely capturing the spatial properties of an acoustic scene, the approach uses an interworking between beamforming and artificial positioning to create an output stereo image that can be optimized for the desired performance without being limited by the real world audio properties of the environment being captured. However, the approach further allows that spatial properties of the environment may be reflected, or even retained, in the output stereo signal.

As previously mentioned, the generator 107 may be arranged to position a mono audio signal in the stereo image of the corresponding intermediate stereo signal component by performing a scaled addition of the first mono audio signal to the two channels of the intermediate stereo signal component where the relative scale factor between the two channels (i.e. the right and left channel) depends on the position in the stereo image that is desired for the mono audio signal/audio source.

In many embodiments, the generator 107 may be arranged to determine a separate (scalar) scale factor for respectively the left and right channel of the intermediate stereo signal component. The two scale factors may be determined as a suitable function of the desired position/the direction of arrival, such as, e.g., as a function of an angular position $\phi$ indicative of the direction of arrival/angle of incidence which specifically may be indicated by the direction/angle of the beam.

As a specific example, the left, L, and right, R, channels of the intermediate stereo signal component are determined using amplitude panning, according to:

$$Li = f(\phi i) * Si$$

$$Ri = (1 - f(\phi i)) * Si$$

where $f(\phi i)$ is a function of the beam direction/angle of incidence $\phi$ for beamformer i with the function being bounded between 0 and 1. Si is the mono audio signal of the beam/beamformer with index i.

Considering the beamforming to be based on a linear array and defining $\phi i$ to be an angle in the range/interval between $-\pi/2$ and $+\pi/2$, then for example $f(-\pi/2)$ can be set to zero, and $f(\pi/2)$ may be set to 1, such that the full range/interval of the stereo image between the left and right loudspeaker is used during reproduction.

In some embodiments, the generator 107 may be arranged to determine a scale factor/gain/amplitude for one of the channels as a function of the direction of a beam of a beamformer generating the first mono audio signal, and then determine the scale factor/gain/amplitude for the second channel such that a sum of the two scale factors/gains/amplitudes meets a criterion. It will be appreciated that this is equivalent to the two scale factors being determined by two functions (one for each scale factor) but with the functions being designed such that the sum of the scale factors meet the criterion.

The criterion may specifically be that the two scale factors must add up to a given value. The value may typically be a predetermined value, such as a fixed value. As a specific example, the above two functions for the scale factors for respectively the left and right channel will always sum to one, indeed the function for the left channel is simply given as one minus the scale factor for the right channel.

An advantage of the specific approach is that the audio sources may be positioned in the stereo image with an increased degree of freedom and are not limited to the specific exact positions that would be determined by a stereo recording.

The position of a given mono audio signal/audio source in the stereo image of the corresponding intermediate stereo signal component and the output stereo signal may be determined as a function of the determined audio source direction (direction of arrival/direction of beam). In some embodiments, the generator 107 may first determine the desired position, e.g., an angular position in the stereo image of an intermediate stereo signal component may be determined as a function of the beam direction and subsequently the levels/scale factors for the left and right channels may be determined. In other embodiments, the levels/scale factors corresponding to the desired position may directly be determined as a function of the direction $\phi$, such as, e.g., reflected by the function f($\phi$i) in the above example.

The relationship between the direction of the audio captured by a given beam, henceforth for brevity referred to as the beam direction $\phi$, and the position of the mono audio signal in the stereo image, henceforth referred to as the stereo image position, may depend on the preferences and requirements of the individual embodiment and application.

In many embodiments, the stereo image position is a monotonic function of the beam direction. For example, if the beam direction $\phi$ monotonically increases from -$\pi$/2 to + $\pi$/2, the stereo image position may also be arranged to monotonically increase from -$\pi$/2 to + $\pi$/2. Thus, the function/relationship mapping the beam direction to the stereo image position is a monotonic function. If amplitude panning is used, the level/amplitude/scale factors will also be monotonic functions of the beam direction $\phi$, and specifically one of the functions will be monotonically increasing and the other will be monotonically decreasing as a function of $\phi$.

This may provide a desirable user experience in many situations. For example, for a teleconferencing application, the detected speakers may be positioned in the stereo image of the output stereo signal such that they are well separated yet are in the same order as in the environment being captured. For example, the speakers may be positioned at fixed positions in the stereo image, e.g., starting at a position of the left (or right) channel and then at intervals of $\pi$/(N-1) but in the same order as in the captured environment. Remote participants listening to the output stereo signal may then be provided with a spatial experience in which the individual speakers are well separated yet have the same spatial relationship as in the room being captured (e.g., allowing the remote participant to be able to determine the seating order of the participants).

In some embodiments, the stereo image position may be a linear function of the beam direction. For example, a direct mapping of angles of the beam direction to angles of the stereo image position may be used. This may allow a closer correspondence to the captured environment and may provide information to the remote participants of the location of the speakers, such as, e.g., whether they are positioned close to each other or not.

In some cases, the mapping between the beam directions and the stereo image position may include a scaling. For example, again representing the beam direction by an angle in the range/interval of - $\pi$/2 to + $\pi$/2 and the stereo image position by an angle in the range/interval of - $\pi$/2 to + $\pi$/2; the function between these may be linear function with a gradient that is different from one.

For example, the scaling may in many embodiments be arranged to increase/broaden the stereo image by applying a linear function with gradient above 1. For example, if it is known that the beam directions in which the desired sources are (most likely) located in the range from - $\pi$/3 to + $\pi$/3, this can be mapped to the full stereo image range of - $\pi$/2 to + $\pi$/2 using a function having a gradient of 3/2. This may be achieved by directly mapping to the scale factors, e.g., by setting one of the scale factors as a linear function for which f(-$\pi$/3)=0 and f($\pi$/3) = 1 and setting the other scale factor as a linear function for which f(-$\pi$/3)=1 and f($\pi$/3) = 0. It will be appreciated that other functions for determining the scale factors may be used including non-linear functions for non-linear amplitude panning approaches.

Thus, the approach may in many embodiments, broaden at least part of the stereo image. Thus, the mapping from the beam direction to the stereo image position may be such that a range/interval of angles representing the beam direction map to a larger range/interval of angles of the stereo image position (with the full range/interval of angles being the same for the beam direction and the stereo image position).

In some embodiments, gradient of less than one may be used and the generator 107 may be arranged to compress the stereo image of the output stereo signal compared to the captured range. For example, the scaling may in many embodiments be arranged to decrease/narrow the stereo image by applying a linear function but with gradient below 1. For example, if it is known that the beam directions in which the desired sources are (most likely) located in the entire range from - $\pi$/2 to +

$\pi/2$ but it is desired to provide a more focused stereo image to the remote participant where all speakers are located within the range from - $\pi/3$ to + $\pi/3$, this can be achieved using a function having a gradient of 2/3. This may be achieved by directly mapping to the scale factors.

Thus, the approach may in many embodiments, narrow at least part of the stereo image. Thus, the mapping from the beam direction to the stereo image position may be such that a range/interval of angles representing the beam direction map to a smaller range/interval of angles of the stereo image position (with the full range of angles being the same for the beam direction and the stereo image position).

In some embodiments, the stereo image position may be a piecewise linear function of the beam direction. For example, different gradients may be used for different ranges of the beam direction. As an example, the central part may be expanded/broadened with the sides being correspondingly compressed to ensure that the entire range is covered. Thus, the gradient may be above 1 for some intervals and below 1 for other intervals.

For example, in some embodiments, a central interval of - $\pi/4$ to + $\pi/4$ of the beam direction may be expanded to the interval of - $\pi/3$ to + $\pi/3$ whereas the peripheral interval of - $\pi/2$ to - $\pi/4$ is mapped to the interval of - $\pi/2$ to - $\pi/3$ and the peripheral interval of + $\pi/4$ to + $\pi/2$ is mapped to the interval of + $\pi/3$ to + $\pi/2$.

Such an approach may provide advantageous performance and an improved user experience in many embodiments. For example, in many teleconferencing applications, multiple speakers may often be positioned centrally with respect to the teleconferencing device with sometimes one or more speakers being positioned more peripherally. Compressing the stereo image at the sides and expanding it centrally may often provide a much improved experience.

In some cases, other non-linear functions may be used and, e.g., non-linear functions may provide a smoother transition between expanded and contracted parts of the stereo image. For example, in many cases a sigmoid function may advantageously be used to map the whole range of the beam direction to the whole range of the stereo image position.

In many embodiments, the combiner 111 may be arranged to generate the output stereo signal to directly sum/include the intermediate stereo signal components while maintaining the relative audio levels as captured by the microphones.

However, in some embodiments, the combiner 111 may be arranged to adapt an amplitude of one intermediate stereo signal component in the output stereo signal relative to an amplitude of another intermediate stereo signal component (from a second beam/beamformer). Thus, in some embodiments, the relative amplitudes of different beams/mono audio signals may be adapted by the apparatus.

For example, in some embodiments, a relative gain may be determined for each intermediate stereo signal component with the gain being a function of the beam direction. The gain for a given beam may then be determined by determining the gain for the corresponding beam direction and the determined gain may be applied to both channels of the corresponding intermediate stereo signal component.

The gain function may for example be a function that has a higher gain towards the center than the sides, or may, e.g., have a constant level except for a small range in which a particular relevant or significant audio source is known to be present (or likely to be present).

The apparatus may thus provide an improved user experience by being arranged to emphasize, e.g., particularly significant areas or sources. For example, for a teleconferencing application, the approach may allow that particular areas are emphasized, such as, e.g., speakers towards the center are emphasized or a position where a specific speaker is located (e.g., the chairman of a meeting being conducted by teleconference).

In some embodiments, the combiner 111 may specifically be arranged to exclude a specific mono audio signal/intermediate stereo signal component if the beam direction for the beam that captured the mono audio signal meets a given criterion. The criterion may specifically be that the beam direction falls within a given exclusion interval such that if the beam direction for a given mono audio signal/intermediate stereo signal component falls within the exclusion interval, then the mono audio signal/intermediate stereo signal component is not included in the generated output stereo signal.

Indeed, in some embodiments, the criterion may be dynamically adaptable, e.g., in response to a user input. For example, during a teleconference a chairman may specify a given range of angles that are to be excluded thereby allowing the chairman to, e.g., exclude a disruptive or unwanted speaker.

It will be appreciated that in some embodiments, the generator 107 and combiner 111 may perform their operations sequentially. For example, the generator 107 may generate N separate stereo signals (and thus N·2 channel signals) which are then fed to the combiner 111 which may proceed to mix them together to form a single output stereo signal. However, in other embodiments, the two functions may be integrated, and the intermediate stereo signal components may be inherent/implicit in the combined operation. For example, in some embodiments, a single matrix multiplication may be applied to an input vector comprising all the mono audio signals to generate the stereo outputs. For example, for each sample instant, the output stereo signal samples may be generated by a matrix multiplication:

$$\bar{O} = \bar{\bar{A}} \cdot \bar{S}$$

where $\bar{O}$ represents a 2 component vector comprising the output stereo samples, $\bar{S}$ is a N component vector comprising the N mono audio signal samples, and $\bar{\bar{A}}$ is an 2 by N matrix with coefficients determined as a function of the direction of incidences $\phi$ as previously described (the coefficients of matrix A may simply be the determined scale factors).

The audio apparatus(s) may specifically be implemented in one or more suitably programmed processors. The different functional blocks may be implemented in separate processors and/or may, e.g., be implemented in the same processor. An example of a suitable processor is provided in the following.

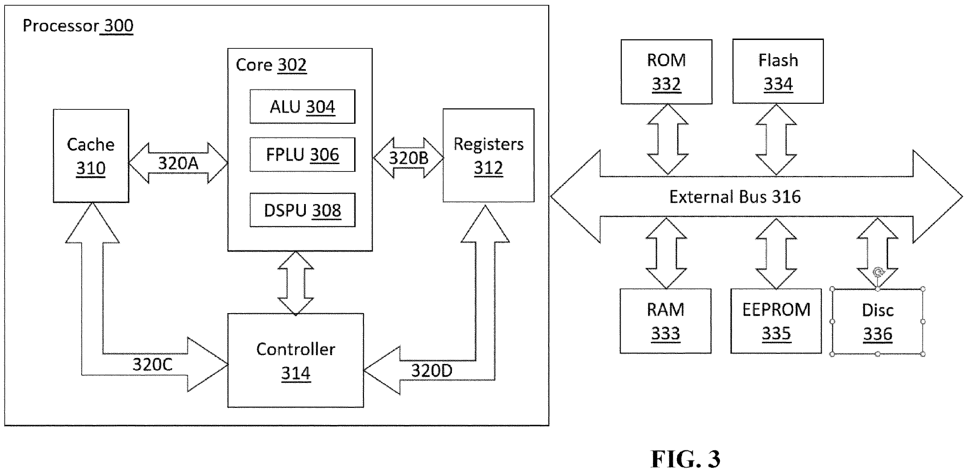

FIG. 3 is a block diagram illustrating an example processor 300 according to embodiments of the disclosure. Processor 300 may be used to implement one or more processors implementing an apparatus as previously described or elements thereof (including in particular one more artificial neural network). Processor 300 may be any suitable processor type including, but not limited to, a microprocessor, a microcontroller, a Digital Signal Processor (DSP), a Field ProGrammable Array (FPGA) where the FPGA has been programmed to form a processor, a Graphical Processing Unit (GPU), an Application Specific Integrated Circuit (ASIC) where the ASIC has been designed to form a processor, or a combination thereof.

The processor 300 may include one or more cores 302. The core 302 may include one or more Arithmetic Logic Units (ALU) 304. In some embodiments, the core 302 may include a Floating Point Logic Unit (FPLU) 306 and/or a Digital Signal Processing Unit (DSPU) 308 in addition to or instead of the ALU 304.

The processor 300 may include one or more registers 312 communicatively coupled to the core 302. The registers 312 may be implemented using dedicated logic gate circuits (e.g., flip-flops) and/or any memory technology. In some embodiments the registers 312 may be implemented using static memory. The register may provide data, instructions and addresses to the core 302.

In some embodiments, processor 300 may include one or more levels of cache memory 310 communicatively coupled to the core 302. The cache memory 310 may provide computer-readable instructions to the core 302 for execution. The cache memory 310 may provide data for processing by the core 302. In some embodiments, the computer-readable instructions may have been provided to the cache memory 310 by a local memory, for example, local memory attached to the external bus 316. The cache memory 310 may be implemented with any suitable cache memory type, for example, Metal-Oxide Semiconductor (MOS) memory such as Static Random Access Memory (SRAM), Dynamic Random Access Memory (DRAM), and/or any other suitable memory technology.

The processor 300 may include a controller 314, which may control input to the processor 300 from other processors and/or components included in a system and/or outputs from the processor 300 to other processors and/or components included in the system. Controller 314 may control the data paths in the ALU 304, FPLU 306 and/or DSPU 308. Controller 314 may be implemented as one or more state machines, data paths and/or dedicated control logic. The gates of controller 314 may be implemented as standalone gates, FPGA, ASIC or any other suitable technology.

The registers 312 and the cache 310 may communicate with controller 314 and core 302 via internal connections 320A, 320B, 320C and 320D. Internal connections may be implemented as a bus, multiplexer, crossbar switch, and/or any other suitable connection technology.

Inputs and outputs for the processor 300 may be provided via a bus 316, which may include one or more conductive lines. The bus 316 may be communicatively coupled to one or more components of processor 300, for example the controller 314, cache 310, and/or register 312. The bus 316 may be coupled to one or more components of the system.

The bus 316 may be coupled to one or more external memories. The external memories may include Read Only Memory (ROM) 332. ROM 332 may be a masked ROM, Electronically Programmable Read Only Memory (EPROM) or any other suitable technology. The external memory may include Random Access Memory (RAM) 333. RAM 333 may be a static RAM, battery backed up static RAM, Dynamic RAM (DRAM) or any other suitable technology. The external memory may include Electrically Erasable Programmable Read Only Memory (EEPROM) 335. The external memory may include Flash memory 334. The External memory may include a magnetic storage device such as disc 336. In some embodiments, the external memories may be included in a system.

It will be appreciated that the approach may further advantageously in many embodiments further include an adaptive canceller which is arranged to cancel a signal component of the beamformed audio output signal which is correlated with the at least one noise reference signal. For example, similarly to the example of FIG. 1, an adaptive filter may have the noise reference signal as an input and with the output being subtracted from the beamformed audio output signal. The adaptive filter may, e.g. be arranged to minimize the level of the resulting signal during time intervals where no speech is present.

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed, the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by, e.g., a single circuit, unit or processor. Additionally, although individual features may be included in different claims, these may possibly be advantageously combined, and the inclusion in different claims does not imply that a combination of features is not feasible and/or advantageous. Also, the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus, references to "a", "an", "first", "second" etc. do not preclude a plurality. Reference signs in the claims are provided merely as a clarifying example shall not be construed as limiting the scope of the claims in any way.

**Claims**

1. An apparatus for generating a stereo audio signal, the apparatus comprising:

   a plurality of audio beamformers (101), each audio beamformer being arranged to generate a mono audio signal representing audio captured by a beam formed by the audio beamformer;
   an adapter (105) arranged to adapt each audio beamformer of the plurality of audio beamformers (101) to capture an audio source;
   a direction determiner (109) arranged to determine a direction of audio captured by beams formed by the plurality of audio beamformers (101);
   a generator (107) arranged to generate an intermediate stereo signal component for each of at least some of the mono audio signals, a first intermediate stereo signal component for a first mono audio signal of the at least some of the mono audio signals comprising the first mono audio signal positioned at a first position in a stereo image of the first intermediate stereo signal component, the first position being dependent on a first direction being a direction of audio captured by a first beam of a first audio beamformer being an audio beamformer out of the plurality of audio beamformers (101) generating the first mono audio signal; and
   a combiner (111) arranged to generate the stereo audio signal to include at least some of the intermediate stereo signal components.

2. The apparatus of claim 1 wherein the apparatus is a teleconferencing apparatus further comprising a transmitter (113) for transmitting the stereo audio signal to a remote device.

3. The apparatus of claim 1 or 2 wherein the generator (107) is arranged to position the first mono audio signal in the stereo image by a scaled addition of the first mono audio signal to a first channel and to a second channel of the first intermediate stereo signal component with a relative scale factor for the first channel relative to the second channel being dependent on the first direction.

4. The apparatus of claim 3 wherein the generator (107) is arranged to determine a scale factor for the first channel as a function of the first direction, and to determine a scale factor for the second channel such that a sum of the first scale factor and the second scale factor meets a criterion.

5. The apparatus of any previous claim wherein the first position is a monotonic function of the first direction.

6. The apparatus of any previous claim wherein the first position is a linear function of the first direction.

7. The apparatus of any previous claim 1-5 wherein the first position is a non-linear function of the first direction.

8. The apparatus of any previous claim wherein the first position is a function of the first direction, the function providing a mapping of an interval of direction angles of the first direction to a larger interval of angles of positions in the stereo image.

9. The apparatus of any previous claim wherein the first position is a function of the first direction, the function providing a mapping of an interval of direction angles to a smaller interval of angles of positions in the stereo image.

10. The apparatus of any previous claim wherein the combiner (111) is arranged to adapt an amplitude of the first intermediate stereo signal component in the combined stereo signal relative to an amplitude of a second intermediate stereo signal component representing a second mono audio signal in the combined stereo signal depending on the first direction.

11. The apparatus of any previous claim wherein the combiner (111) is arranged to not include the first interim stereo signal component in the combined stereo signal if the first direction meets a criterion.

12. The apparatus of any previous claim wherein the first direction is indicative of a direction of arrival for audio captured by the first audio beamformer.

13. A method of capturing audio of generating a stereo audio signal, the method comprising:

each audio beamformer of a plurality of audio beamformers (101) generating a mono audio signal representing audio captured by a beam formed by the audio beamformer;
adapting each audio beamformer of the plurality of audio beamformers (101) to capture an audio source;
determining a direction of audio captured by beams formed by the plurality of audio beamformers;
generating an intermediate stereo signal component for each of at least some of the mono audio signals, a first intermediate stereo signal component for a first mono audio signal of the at least some of the mono audio signals comprising the first mono audio signal positioned at a first position in a stereo image of the first intermediate stereo signal component, the first position being dependent on a first direction being a direction of audio captured by a first beam of a first audio beamformer being an audio beamformer out of the plurality of audio beamformers (101) generating the first mono audio signal; and
generating the stereo audio signal to include at least some of the intermediate stereo signal components.

14. A computer program product comprising computer program code means adapted to perform all the steps of claim 13 when said program is run on a computer.

**FIG. 1**

FIG. 2

FIG. 3

Europäisches
Patentamt

European
Patent Office

Office européen
des brevets

# EUROPEAN SEARCH REPORT

**Application Number**

EP 23 16 7157

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/264450 A1 (JANSE CORNELIS PIETER [NL] ET AL) 27 October 2011 (2011-10-27) | 1-6,8,9, 12-14 | INV. H04R3/00 H04S7/00 |
| Y | * paragraphs [0001], [0004] – [0011], [0031] – [0037], [0043] – [0051]; figures 1, 2, 6 * ----- | 7-11 | ADD. H04R1/40 |
| Y | US 2009/116652 A1 (KIRKEBY OLE [FI] ET AL) 7 May 2009 (2009-05-07) * paragraphs [0002] – [0006], [0026], [0066] – [0067]; figure 7 * ----- | 7-9 | |
| Y | US 2019/289259 A1 (RUDBERG TORE [SE] ET AL) 19 September 2019 (2019-09-19) * paragraph [0022] – paragraph [0060]; figures 1-4C * ----- | 10,11 | |

**TECHNICAL FIELDS SEARCHED (IPC)**

H04R
H04S

The present search report has been drawn up for all claims

| Place of search | Date of completion of the search | Examiner |
|---|---|---|
| Munich | 15 September 2023 | Joder, Cyril |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

...............................................................................................

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 23 16 7157

This annex lists the patent family members relating to the patent documents cited in the above-mentioned European search report.
The members are as contained in the European Patent Office EDP file on
The European Patent Office is in no way liable for these particulars which are merely given for the purpose of information.

15-09-2023

| Patent document cited in search report | | | Publication date | Patent family member(s) | | | Publication date |
|---|---|---|---|---|---|---|---|
| US 2011264450 | A1 | | 27-10-2011 | CN | 102265643 | A | 30-11-2011 |
| | | | | EP | 2382799 | A1 | 02-11-2011 |
| | | | | JP | 5538425 | B2 | 02-07-2014 |
| | | | | JP | 5859600 | B2 | 10-02-2016 |
| | | | | JP | 2012513701 | A | 14-06-2012 |
| | | | | JP | 2014180008 | A | 25-09-2014 |
| | | | | KR | 20110099750 | A | 08-09-2011 |
| | | | | US | 2011264450 | A1 | 27-10-2011 |
| | | | | WO | 2010073193 | A1 | 01-07-2010 |
| US 2009116652 | A1 | | 07-05-2009 | CN | 101843114 | A | 22-09-2010 |
| | | | | EP | 2208363 | A1 | 21-07-2010 |
| | | | | EP | 2613564 | A2 | 10-07-2013 |
| | | | | US | 2009116652 | A1 | 07-05-2009 |
| | | | | WO | 2009056956 | A1 | 07-05-2009 |
| US 2019289259 | A1 | | 19-09-2019 | CN | 111602414 | A | 28-08-2020 |
| | | | | EP | 3741135 | A1 | 25-11-2020 |
| | | | | US | 2019222804 | A1 | 18-07-2019 |
| | | | | US | 2019289259 | A1 | 19-09-2019 |
| | | | | WO | 2019143565 | A1 | 25-07-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7146012 B
- US 7602926 B
- US 6774934 B

**Non-patent literature cited in the description**

- **F. GRONDIN et al.** Fast Cross-correlation for TDOA Estimation on Small Aperture Microphone Arrays. *arXiv:2204.13622*